# EUROPÄISCHE PATENTSCHRIFT

(11) **EP 2 266 835 B1**
(45) Veröffentlichungstag und Bekanntmachung des Hinweises auf die Patenterteilung: **04.01.2012**
(21) Anmeldenummer: 10006414.6
(22) Anmeldetag: 21.06.2010
(51) Int. Cl.: B60P 7/15, B62D 33/02

(54) **Transportaufbau mit Rungen**
Transport superstructure with stanchions
Construction de transport doté de ranches

(30) Priorität: 22.06.2009 DE 102009030072
(43) Veröffentlichungstag der Anmeldung: 29.12.2010
(73) Patentinhaber: Fahrzeugwerk Bernard Krone GmbH, 48480 Spelle (DE)
(72) Erfinder: Herding, Michael, 49757 Werlte (DE); Möhlenkamp, Wilhelm, 49757 Werlte (DE)
(74) Vertreter: Busse & Busse

(56) Entgegenhaltungen:
- EP-A1- 1 927 506
- EP-A1- 2 100 801
- DE-U1-202004 009 044
- DE-U1-202009 003 533

## Beschreibung

Die Erfindung bezieht sich auf ein Fahrzeug mit einem Ladeboden, insbesondere einen Sattelauflieger mit einer Vorrichtung zur Sicherung einer Ladung, die mehrere, in unterschiedlichen Lagepositionen an dem Ladeboden festlegbare Stützbalken zur Ladungssicherung aufweist.

Dabei sind die Stützbalken als Einsteckrungen ausgebildet, die in in dem Ladeboden oder in etwa planparallel zu diesem in Stützauslegern vorgesehene Stützöffnungen einsteckbar sind. In Längs- oder in Querrichtung des Ladebodens sind an verschiedenen Stellen des Ladebodens Festlegung von unterschiedlichen Lagepositionen von Einsteckrungen mehrere hintereinander oder nebeneinander angeordnete Stützöffnungen vorgesehen.

Ein Fahrzeug mit einer Vorrichtung zur Ladungssicherung ist beispielsweise aus der EP 1 733 955 B1 bekannt. Bei dieser Vorrichtung zur Ladungssicherung sind vertikal ausgerichtete Stützbalken an einem Querbalken zu sichern und dort lageverschieblich zwecks Einstellung einer entsprechenden Ladeposition quer zur Fahrzeugerstreckung geführt.

Die Querbalken, an denen die Stützbalken abgestützt sind, sind ihrerseits in Längsrichtung des Ladebodens zu verschieben und seitlich an einer Leiste festzulegen und zu verriegeln. Damit lassen sich sehr gut rohrförmige Ladungen, Coils und dgl. transportieren, die während des Transportes auf den Querbalken aufliegen. Sind jedoch flächige Gegenstände zu transportieren, sind die Querbalken hinderlich, da keine planparallele Ladefläche mehr zur Verfügung steht. Des weiteren können handelsübliche Rungen nicht Verwendung finden als Stützbalken, da diese die entsprechenden Anschlussverbindungen für die Querbalken aufzuweisen haben. Die vorzusehenden Querbalken erhöhen im Übrigen das Gewicht des Fahrzeuges, was zu Lasten der Beladungskapazität des Fahrzeuges geht.

In zunehmendem Maße dienen solche Fahrzeuge auch dazu, Stahlmatten zu transportieren. Stahlmatten werden in verschiedenen Längen hergestellt. Dessen ungeachtet ist nach der Straßenverkehrsordnung eine formschlüssige Ladungssicherung gefordert, was dazu führt, dass mit zusätzlichen Verzurrungen, beispielsweise mit Hilfe von Zurrbändern, zusätzlich zu sichern ist.

Aus dem DE-GM 20 2009 003 533 U1 ist ein Nutzfahrzeug mit einer Ladefläche und einer Vorrichtung zur Ladungssicherung, insbesondere zur Sicherung von Baustahlmatten als Ladung der eingangs genannten Art bekannt. Dazu ist eine Vielzahl von in Stützöffnungen einsteckbaren seitlichen Rungen vorgesehen, wobei der lichte Abstand zwischen zwei quer zur Fahrzeuglängsrichtung gegenüber angeordneten seitlichen Rungen einstellbar ist. Dazu sind seitlich im wesentlichen L-förmige Ausleger vorgesehen, in die seitliche Rungen einsteckbar sind, wobei die Ausleger in Führungen angeordnet sind unterhalb der Ladefläche, so dass sie ein- und ausgeschoben werden können zwecks Veränderung des Seitenbegrenzungsmaßes von z.B. Baustahlmatten. Eine formschlüssige Sicherung der Ladung in Fahrzeuglängsrichtung bei unterschiedlichen Ladungsabmessungen ist jedoch mit diesem Nutzfahrzeug nicht möglich.

Es ist daher Aufgabe der vorliegenden Erfindung, hier Abhilfe zu schaffen und ein Fahrzeug mit einem Ladeboden zur Verfügung zu stellen, mit dem auch unterschiedliche lange Ladungen, beispielsweise auch Stahlmatten, transportiert werden können und wobei in einfache Weise ein formschlüssige Ladungssicherung auch in Fahrzeuglängsrichtung zu erzielen ist.

Zur Lösung dieser Aufgabe zeichnet sich das Fahrzeug der eingangs genannten Art dadurch aus, dass in Längsrichtung des Ladebodens mit Abstand zueinander angeordnete Stützöffnungsabschnitte mit mehreren in Reihe hintereinander angeordneten Stützöffnungen vorgesehen sind.

Die Stützbalken sind danach als Einsteckrungen ausgebildet, die handelsüblich ausgebildet sein können. Auf alle Fälle bleibt ein ebener Ladeboden erhalten, in den die entsprechenden Stützöffnungen an den verschiedensten Stellen eingelassen sind. In diese können die Einsteckrungen je nach Erfordernis der zu sichernden Ladung hineingesteckt und auch ggf. zusätzlich gesichert werden. Um auf verschiedene Breiten der Ladung Rücksicht nehmen zu können, beispielsweise auch auf solche Breiten, die die Breite des Ladebodens überschreiten, ist vorzugsweise vorgesehen oder aber auch alternativ, dass Stützausleger vorgesehen sind, die sich relativ zu der Quererstreckung des Ladebodens bewegen lassen, indem diese beispielsweise als verschiebliche Stützausleger ausgebildet sind, die eine entsprechende Stützöffnung haben, in die wiederum eine entsprechende Einsteckrunge einzubringen ist. Zusätzliche Bauteile, wie beispielsweise ein Querbalken, sind entbehrlich. Es ist eine formschlüssige Ladungssicherung gewährleistet, wobei die entsprechenden Einsteckrungen aufgrund der Vielzahl der vorgesehenen Stützöffnungen schnell und lagegerecht zu platzieren sind.

Durch die vorgesehene Stützöffnungsabschnitte lassen sich die Einsteckrungen mit nur wenigen Handgriffen aus einer Stützöffnung dieses Stützöffnungsabschnittes in eine andere Stützöffnung einstecken, so dass auch bei unterschiedlichen Abmessungen von z.B. Stahlmatten durch die Auswahl der geeigneten Stützöffnung innerhalb eines Stützöffnungsabschnittes immer eine formschlüssige Ladungssicherung ermöglicht ist. Dies kann mit ein und derselben Einsteckrunge erfolgen, ohne dass irgendwelche Justierarbeiten an sonstigen Fahrzeugteilen notwendig sind Zur weiteren Erläuterung der Erfindung wird auf die Zeichnung verwiesen. In der Zeichnung zeigen:
- Fig. 1: in einer schematischen perspektivischen Darstellung ein als Sattel- auflieger ausgebildetes Ausführungsbeispiel eines Fahrzeuges nach der Erfindung,
- Fig. 2: vergrößert ausschnittsweise den rückwärtigen Bereich des Ladebodens des Ausführungsbeispiels nach Fig. 1, und
- Fig. 3: vergrößert einen seitlichen Bereich (ausschnittsweise) des Ladebodens des Ausführungsbeispiels nach Fig. 1.

In der Zeichnung sind grundsätzlich gleichwirkende Teile mit übereinstimmenden Bezugsziffern versehen. Allgemein mit 1 ist das Fahrzeug beziffert, das in dem dargestellten Ausführungsbeispiel als gezogener Sattelauflieger ausgebildet ist mit einem über Räder 2 auf dem Boden abgestützten Fahrzeugchassis 3, das einen Ladeboden 4 trägt.

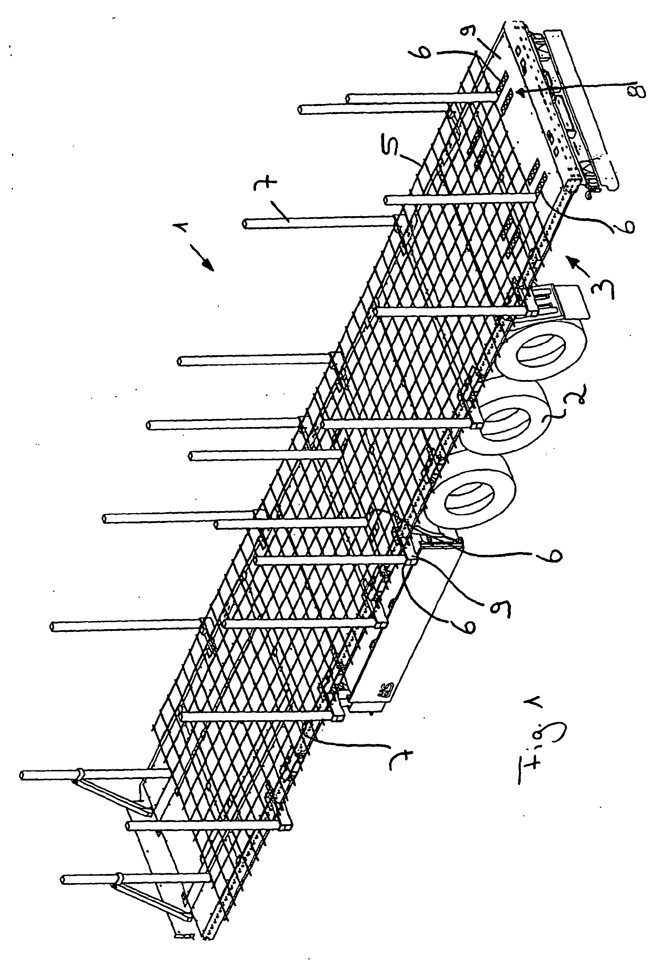

In Fig. 1 ist eine Ladesituation dargestellt, bei der auf dem Ladeboden 4 Stahlmatten 5 zu transportieren sind. Da die Stahlmatten 5 unterschiedliche Breiten und/oder Längen haben können, ist es erforderlich, diese dennoch formschlüssig zu sichern. Dazu sind an den verschiedenen Stellen des Ladebodens 4 Stützöffnungen 6 vorgesehen, in die als Stützbalken Einsteckrungen 7 hineinzustecken sind. Die Stützöffnungen 6 gehen direkt von der Oberfläche des Ladebodens 4 aus, so dass die Ladebodenebene durch das Vorsehen dieser Stützöffnungen nicht beeinträchtigt ist.

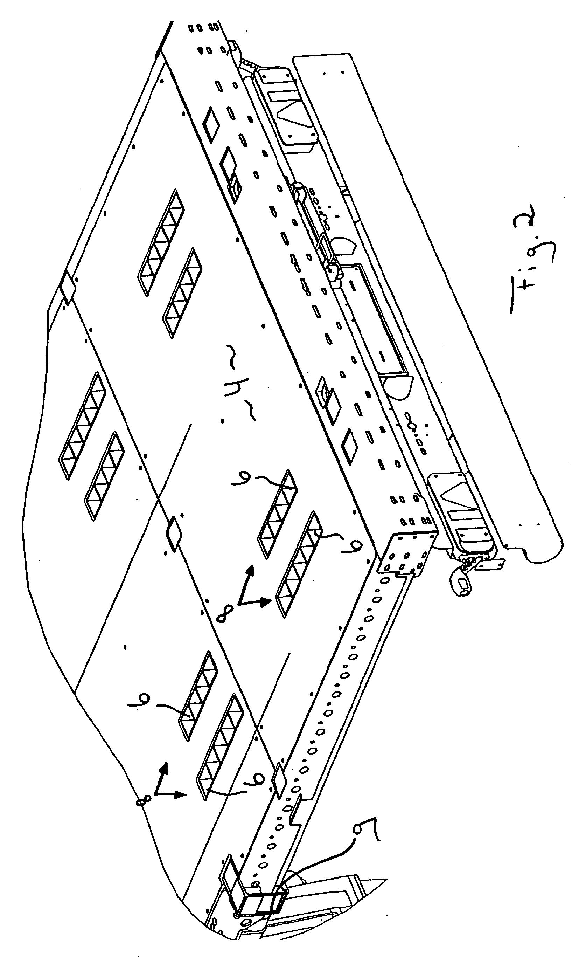

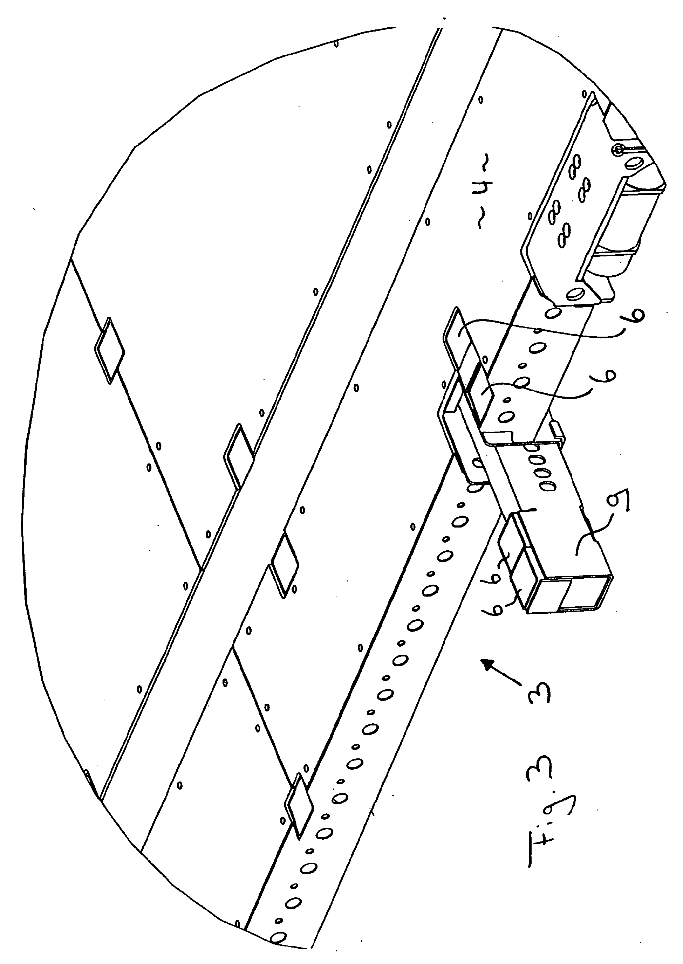

In verschiedenen Abschnitten in Längs- und Querrichtungen sind jeweils Abschnitte aus mehreren Stützöffnungen 6 vorgesehen. In den dargestellten Ausführungsbeispielen haben diese Abschnitte 8 (sh. auch Fig. 2) vier oder fünf hintereinander in Reihe angeordnete Stützöffnungen 6, wobei in Querrichtung des Ladebodens 4 Pakete von mehreren seitlich nebeneinander angeordneten Abschnitten 8 vorgesehen sein können. Für seitliche Einsteckrungen 7 ist darüber hinaus vorgesehen, dass diese in einem Stützausleger 9 mit entsprechender Stützöffnung 6 eingebracht werden können. Dieser Stützausleger 9, der in Fig. 3 im ausgezogenen Zustand gezeigt ist, kann auch mehrere Stützöffnungen 6 haben. In Fig. 3 ist nur ein Stützausleger 9 gezeigt, es können aber auch mehrere Stützausleger 9 an einer oder beiden Fahrzeugseiten vorgesehen sein. In Fig. 3 sind zusätzliche seitlich versetzte in Fahrtrichtung hinter dem Stützausleger 9 befindliche versetzt angebrachte Stützöffnungen 6 zu sehen, die die Möglichkeiten der seitlichen Ladungssicherungen erweitern.

Wie Fig. 1 zu entnehmen ist, ist mit großer Variabilität auch eine schwierige Transportaufgabe, wie das Transportieren von von den Abmessungen her variierenden Stahlmatten zu lösen. Sind die Einsteckrungen 7 entfernt, liegt eine ebene Ladefläche vor. Sonstige, das Gesamtgewicht des Fahrzeugs erhöhende Bauteile sind nicht notwendig.

## Patentansprüche

1. Fahrzeug (1) mit einem Ladeboden (4), insbesondere Sattelauflieger, mit einer Vorrichtung zur Sicherung einer Ladung (5), die mehrere, in unterschiedlichen Lagepositionen an dem Ladeboden (4) festlegbare Stützbalken (7) zur Ladungssicherung aufweist, wobei die Stützbalken (7) als Einsteckrungen ausgebildet sind, die in in dem Ladeboden (4) und in etwa planparallel zu diesem in Stützauslegern (9) vorgesehene Stützöffnungen (6) einsteckbar sind, und wobei in Längs- oder in Quererstreckung des Ladebodens (4) an verschiedenen Stellen des Ladebodens (4) zur Festlegung von unterschiedlichen Lagepositionen von Einsteckrungen (7) mehrere hintereinander oder nebeneinander angeordnete Stützöffnungen (6) vorgesehen sind, **dadurch gekennzeichnet, dass** in Längsrichtung des Ladebodens (4) mit Abstand zueinander angeordnete Stützöffnungsabschnitte (8) mit mehreren, in Reihe hintereinander angeordneten Stützöffnungen (6) vorgesehen sind.

2. Fahrzeug nach Anspruch 1, **dadurch gekennzeichnet, dass** in Querrichtung des Fahrzeuges mehrere parallel mit Abstand zueinander vorgesehene Stützöffnungsabschnitte (8) mit mehreren Stützöffnungen (6) für Einsteckrungen (7) vorgesehen sind.

3. Fahrzeug nach Anspruch 1 oder 2, **dadurch gekennzeichnet, dass** in Seitenbereichen des Ladebodens (4) in verschiebliche Stützausleger (9) einsteckbare und demontierbare Einsteckrungen (7) vorgesehen sind, die über die Stützausleger (9) lageveränderlich an dem Ladeboden (4) abstützbar sind.

4. Fahrzeug nach Anspruche 3, **dadurch gekennzeichnet, dass** der Stützausleger (9) verschieblich an dem Ladeboden oder einem Fahrzeugchassis geführt ist und in einer gewählten Lageposition verriegelbar ist.

## Claims

1. Vehicle (1) having a load-carrying floor (4), in particular a semi-trailer, having an arrangement for securing a load (5) which has a plurality of supporting bars (7) for securing a load which can be locked to the load-carrying floor (4) in different positions, the supporting bars (7) taking the form of insertable stanchions which can be inserted in supporting openings (6) which are provided in the load-carrying floor (4) and, in a plane approximately parallel thereto, in supporting extensions (9), and a plurality of supporting openings (6) arranged one behind the other or next to one another being provided at various points on the load-carrying floor (4) along the longitudinal extent of the said load-carrying floor (4) or across the transverse extent thereof to lay down different positions for insertable stanchions (7), **characterised in that** there are provided supporting-opening sections (8) which are arranged at a distance from one another in the longitudinal direction of the load-carrying floor (4) and which have a plurality of supporting openings (6) arranged one behind the other in a row.

2. Vehicle according to claim 1, **characterised in that** there are provided in the transverse direction of the vehicle a plurality of supporting-opening sections (8) which are provided in parallel with one another at a distance and which have a plurality of supporting openings (6) for insertable stanchions (7).

3. Vehicle according to claim 1 or 2, **characterised in that** there are provided in lateral regions of the load-carrying floor (4) insertable stanchions (7) which can be inserted in and removed from displaceable supporting extensions (9) and which, by means of the supporting extensions (9), can be supported on the load-carrying floor (4) in variable positions.

4. Vehicle according to claim 3, **characterised in that** the supporting extension (9) is guided on the load-carrying floor or on a chassis of the vehicle to be displaceable and can be locked in a selected position.

## Revendications

1. Véhicule (1) présentant un fond de chargement (4), en particulier semi-remorque, avec un dispositif pour le blocage d'un chargement (5) qui présente plusieurs barres d'appui (7) pouvant être fixées dans différentes positions sur le fond de chargement (4) pour le blocage du chargement, sachant que les barres d'appui (7) sont réalisées comme des ranchers amovibles pouvant être emboîtés dans des ouvertures d'appui (6) prévues dans le fond de chargement (4) et à peu près de manière plane et parallèle à celui-ci dans des bras supports (9), et sachant que plusieurs ouvertures d'appui (6) disposées les unes derrière les autres ou les unes à côté des autres sont prévues dans l'étendue longitudinale ou transversale du fond de chargement (4) à différents endroits du fond de chargement (4) pour la fixation de différentes positions de ranchers amovibles (7), **caractérisé en ce que** des sections d'ouverture d'appui (8) disposées à distance les unes des autres avec plusieurs ouvertures d'appui (6) disposées en série les unes derrière les autres, sont prévues dans le sens longitudinal du fond de chargement (4).

2. Véhicule selon la revendication 1, **caractérisé en ce que** plusieurs sections d'ouverture d'appui (8) prévues parallèlement à distance les unes des autres avec plusieurs ouvertures d'appui (6) pour des ranchers amovibles (7) sont prévues dans le sens transversal du véhicule.

3. Véhicule selon la revendication 1 ou 2, **caractérisé en ce que** des ranchers amovibles (7) démontables et pouvant être emboîtés dans des bras supports (9) mobiles sont prévus dans des zones latérales du fond de chargement (4), lesquels ranchers peuvent être en appui par le biais des bras supports (9) en position variable contre le fond de chargement (4).

4. Véhicule selon la revendication 3, **caractérisé en ce que** le bras support (9) est guidé de manière mobile sur le fond de chargement ou sur un châssis de véhicule et peut être verrouillé dans une position choisie.
